# EUROPÄISCHE PATENTSCHRIFT

(11) **EP 3 037 704 B1**
(45) Veröffentlichungstag und Bekanntmachung des Hinweises auf die Patenterteilung: **23.05.2018**
(21) Anmeldenummer: 14199740.3
(22) Anmeldetag: 22.12.2014
(51) Int. Cl.: F16K 31/06

(54) **Mischventil**
Mixing valve
Vanne mélangeuse

(43) Veröffentlichungstag der Anmeldung: 29.06.2016
(73) Patentinhaber: Grundfos Management A/S, 8850 Bjerringbro (DK)
(72) Erfinder: Iversen, Käre, 8870 Langä (DK)
(74) Vertreter: Patentanwälte Vollmann & Hemmer

(56) Entgegenhaltungen:
- DE-A1-102010 037 227
- DE-A1-102012 002 941
- DE-A1-102012 024 583
- DE-U1- 20 001 539
- US-A- 4 674 678

## Beschreibung

Die Erfindung betrifft eine Heiz- oder Kühlanlagen-Mischereinrichtung.

In hydraulischen Heizungs- und/oder Kühlanlagen werden häufig Mischereinrichtungen verwendet, um eine Vorlauftemperatur unabhängig von der Ausgangstemperatur einer Wärme- oder Kältequelle einstellen zu können. Beispielsweise für Fußbodenheizungsanlagen ist es erforderlich, die Vorlauftemperatur, welche ausgangsseitig eines Heizkessels anliegt, zu reduzieren. In Mischereinrichtungen geschieht dies in der Weise, dass zwei unterschiedlich temperierte Flüssigkeitsströmungen miteinander gemischt werden, um eine gewünschte Ausgangstemperatur einzustellen. So kann beispielsweise in einer Heizungsanlage dem Vorlauf abgekühlte Flüssigkeit aus dem Rücklauf zugemischt werden. Umgekehrt kann in einer Kühlanlage die Vorlauftemperatur erhöht werden, indem dem Vorlauf erwärmte Flüssigkeit aus dem Rücklauf zugemischt wird.

In automatisch gesteuerten Heizungs- oder Kühlanlagen ist die Mischereinrichtung in der Regel als Mischerventil ausgebildet, welches von einem Stellmotor bewegt wird. Zur Ansteuerung des Stellmotors ist eine Mischersteuereinrichtung erforderlich, welche entweder als separates Modul vorgesehen wird oder in die Steuerung eines Heizkessels integriert sein kann. Die einzelnen Anlagenkomponenten müssen daher nicht nur hydraulisch sondern auch elektrisch miteinander verbunden werden, was für den Heizungsmonteur einen größeren Montageaufwand bedeutet.

DE 10 2010 037 227 A1 offenbart eine Wärmeversorgungsanlage mit einer Mischeinrichtung. Die Vorrichtung weist ein Mischventil mit einer Antriebseinheit und einer externen Steuereinrichtung sowie einem externen Temperatursensor auf. D. h., hier gibt es eine Vielzahl von Einzelteilen, welche in eine Heizungsanlage integriert werden müssen.

DE 10 2012 002 941 A1 offenbart ein Verfahren zum Betrieb einer Heizungsanlage. Bei diesem Verfahren können Motorantriebe zum Einstellen der Ventile an einzelnen Heizkörpern Verwendung finden. Diese dienen jedoch nicht zum Mischen zweier Fluidströme.

DE 200 01 539 U1 offenbart eine Heizung mit einem herkömmlichen Mischventil, welches über einen Stellmotor angetrieben wird und über eine externe Steuerung gesteuert wird, welche mit einer Vielzahl von Temperatursensoren verbunden ist.

DE 10 2012 024 583 A1 offenbart eine mehrkreisige Heizungs- oder Kühlanlage, welche ein Mischventil aufweist. Dieses wird wie die gesamte Heizungsanlage über eine Steuereinrichtung gesteuert, welche mit verschiedenen Sensoren verbunden ist.

In der US 4 674 678 A ist eine Mischereinrichtung gemäß dem Oberbegriff von Anspruch 1 offenbart.

Im Hinblick auf diese Problematik ist es Aufgabe der Erfindung eine verbesserte Heiz- oder Kühlanlagen-Mischereinrichtung bereitzustellen, welche sich auf einfache Weise in verschiedenste Heizungs- und/oder Kühlanlagen integrieren lässt.

Diese Aufgabe wird durch eine Heiz- oder Kühlanlagen-Mischereinrichtung mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Die erfindungsgemäße Heiz- oder Kühlanlagen-Mischereinrichtung ist vorgesehen zum Einsatz in einer hydraulischen Heizungs- und/oder Kühlanlage. In einer solchen hydraulischen Heizungs- und/oder Kühlanlage wird ein flüssiger Wärmeträger, beispielsweise Wasser, im Kreislauf umgewälzt, wobei er eine oder mehrere Wärme- und/oder Kältequellen und zu kühlende bzw. zu erwärmende Verbraucher durchströmt. Als Kältequelle können beispielsweise Kühlaggregate und als Wärmequelle fossilbeheizte Heizkessel oder Solaranlagen zum Einsatz kommen. Es können aber auch alle anderen geeigneten Wärme- bzw. Kältequellen verwendet werden.

Die erfindungsgemäße Mischereinrichtung weist ein Ventilgehäuse auf, welches einen ersten, einen zweiten und einen dritten Anschluss aufweist, über welche das Ventilgehäuse mit dem Leitungssystem der Heizungs- und/oder Kühlanlage verbindbar ist. Im Inneren des Ventilgehäuses wird ein erster Strömungsweg von dem ersten Anschluss zu dem zweiten Anschluss und ein zweiter Strömungsweg von dem ersten Anschluss zu dem dritten Anschluss definiert. So können Flüssigkeitsströmungen, welche am zweiten und am dritten Anschluss zugeführt werden, miteinander gemischt werden und über den ersten Anschluss kann die so gemischte Strömung das Ventilgehäuse verlassen. In umgekehrter Richtung kann die Mischereinrichtung auch eingesetzt werden, um eine Flüssigkeitsströmung zu teilen, wenn die Flüssigkeitsströmung dem ersten Anschluss zugeführt wird und aus dem zweiten und dem dritten Anschluss austritt. Im Inneren des Ventilgehäuses ist ein bewegliches Ventilelement angeordnet, welches in beiden Strömungswegen gelegen ist und geeignet ist, die Strömungswege zu öffnen oder zu schließen. So ist das Ventilelement so ausgebildet und angeordnet, dass es durch seine Bewegung bzw. Verlagerung das Verhältnis der Querschnitte der beiden Strömungswege zueinander variiert. Auf diese Weise kann der Durchfluss in den beiden Strömungswegen wechselseitig verändert werden. Bevorzugt ist das Ventilelement derart beweglich, dass es bei einer Bewegung, welche den ersten Strömungsweg im Querschnitt verkleinert, gleichzeitig den zweiten Strömungsweg im Querschnitt vergrößert und umgekehrt. Besonders bevorzugt ist das Ventilelement auch in eine Position bewegbar, in welcher zumindest einer der Strömungswege vollständig geschlossen ist. Beispielsweise kann in jeweils einer Endposition einer der Strömungswege verschlossen sein. D. h. in einer ersten Endstellung des Ventilelementes ist der erste Strömungsweg geschlossen und der zweite Strömungsweg vollständig geöffnet, während in einer zweiten Endstellung der erste Strömungsweg vollständig geöffnet und der zweite Strömungsweg vollständig verschlossen ist. In dieser grundsätzlichen Ausgestaltung entspricht die erfindungsgemäße Mischereinrichtung im Wesentlichen bekannten Mischereinrichtungen für hydraulische Heizungs- bzw. Kühlanlagen.

Erfindungsgemäß ist die Heiz- oder Kühlanlagen-Mischereinrichtung so ausgebildet, dass alle zum Betrieb der Mischereinrichtung wesentlichen Bauteile mit Ausnahme einer Steuereinrichtung in eine Baueinheit integriert sind. So ist an dem Ventilgehäuse ein Antrieb zum Bewegen des Ventilelementes angeordnet. Bei dem Antrieb handelt es sich vorzugsweise um einen elektrischen Motor, über welchen sich das Ventilelement gezielt in bestimmte Positionen bewegen lässt. Der Antrieb weist bevorzugt auch Erfassungsmittel bzw. einen Lagesensor auf, um die aktuelle Position des Ventilelementes zu erfassen. Im Falle eines Schrittmotors kann die Positionserfassung durch den Motor selber erfolgen bzw. die Position so vorgegeben werden, dass auf die Erfassung der tatsächlichen Position verzichtet werden kann. Der Antrieb weist erfindungsgemäß ferner eine interne Steuereinrichtung zur Bewegungssteuerung des Antriebes auf. Die interne Steuereinrichtung dient zur Lagesteuerung bzw. Lageregelung des Ventilelementes, sodass die interne Steuereinrichtung sicherstellt, dass das Ventilelement eine der internen Steuereinrichtung von einer externen Steuereinrichtung vorgegebene Position einnimmt und vorzugsweise beibehält. Dazu kann der internen Steuereinrichtung das Ausgangssignal eines Lagesensors, welcher die Position des Ventilelements erfasst, als Ist-Größe zugeführt werden, um einen Regelkreis zu bilden. Die interne Steuereinrichtung weist darüber hinaus eine erste Kommunikationsschnittstelle zur Kommunikation mit der externen Steuereinrichtung auf, welche eine korrespondierende zweite Kommunikationsschnittelle aufweist. So kann von der externen Steuereinrichtung, welche bevorzugt Teil der erfindungsgemäßen Mischereinrichtung ist, der internen Steuereinrichtung die gewünschte Position des Ventilelementes vorgegeben bzw. über die Kommunikationsschnittstellen übermittelt werden, wobei die interne Steuereinrichtung den Antrieb dann so ansteuert bzw. regelt, dass das Ventilelement diese gewünschte Position einnimmt.

Ferner ist erfindungsgemäß in oder an dem Ventilgehäuse ein interner Sensor angeordnet, welcher mit der ersten Kommunikationsschnitte zur Übertragung eines Sensorsignals zu der externen Steuereinrichtung verbunden ist. So kann der interne Sensor an oder in dem Ventilgehäuse eine Zustandsgröße erfassen und das korrespondierende Sensorsignal über die erste Kommunikationsschnittstelle zu der zweiten Kommunikationsschnittstelle und damit der externen Steuereinrichtung übertragen. In der externen Steuereinrichtung kann das Sensorsignal dann verarbeitet werden. Beispielsweise kann die externe Steuereinrichtung so ausgebildet sein, dass sie auf Grundlage des Sensorsignals eine Stellgröße zur Positionierung des Ventilelementes ausgibt, wobei diese Stellgröße dann wiederum von der zweiten Kommunikationsschnittstelle an die erste Kommunikationsschnittstelle und dann zu der internen Steuereinrichtung übertragen wird und von dieser zur Ansteuerung des Antriebs verwendet wird.

Bei der so beschriebenen Ausgestaltung sind somit an oder in dem Ventilgehäuse der Antrieb, eine interne Steuereinrichtung für den Antrieb und eine Kommunikationsschnittelle zur Kommunikation mit einer externen Steuereinrichtung sowie zumindest ein interner Sensor angeordnet. Somit sind alle wesentlichen Komponenten direkt in die Mischereinrichtung bzw. eine Baueinheit an dem Ventilgehäuse integriert. So wird eine Ventilbaugruppe mit allen wesentlichen Komponenten gebildet. Somit vereinfacht sich der Installationsaufwand, da nach Einbau des Ventilgehäuses in das hydraulische Leitungssystem vorzugsweise lediglich noch die Kommunikationsverbindung zu der externen Steuereinrichtung hergestellt werden muss und ein elektrischer Anschluss der internen Steuereinrichtung vorgenommen werden muss. Weitere Verdrahtungen für Sensoren oder Steuereinrichtungen sind dann bevorzugt nicht mehr erforderlich.

Die erfindungsgemäß geschaffene Aufteilung der Steuereinrichtung in eine interne Steuereinrichtung, welche an dem Ventilgehäuse angeordnet ist, sowie eine externe Steuereinrichtung hat den Vorteil, dass als externe Steuereinrichtung eine Steuereinrichtung verwendet werden kann, welche noch weitere Steuerungs- oder Kommunikationsaufgaben in einem System übernehmen kann. Insbesondere kann eine ohnehin für andere Zwecke verwendete Steuereinheit die Steuerung der Mischereinrichtung mit übernehmen, sodass hier ohnehin vorhandene Komponenten für weitere Funktionen genutzt werden können. Auch kann die Anbindung an externe Systeme, wie Sensoren oder weitere Steuerungen übernommen oder mitgenutzt werden. Dies vereinfacht den Aufbau des Ventilgehäuses mit der an oder in dieser angeordneten internen Steuereinrichtung, da der Funktionsumfang der internen Steuereinrichtung sehr reduziert ist.

Der zumindest eine Sensor ist vorzugsweise in dem Ventilgehäuse an oder in einem der Strömungswege angeordnet, um zumindest eine Zustandsgröße des sich im Strömungsweg befindlichen Mediums zu erfassen. Diese Zustandsgröße kann dann, wie oben beschrieben, zur Steuerung bzw. Regelung der Mischereinrichtung verwendet werden. Zusätzlich kann vorzugsweise zumindest ein externer, d. h. außerhalb des Ventilgehäuses angeordneter Sensor vorgesehen sein, welcher mit der externen Steuereinrichtung, vorzugsweise getrennt von zumindest der ersten Kommunikationsschnittstelle, verbunden ist. Ein solcher Sensor kann eine Zustandsgröße in dem hydraulischen System an einer Stelle beabstandet von dem Mischventil, d. h. dem Ventilgehäuse, erfassen. Das Sensorsignal dieses Sensors kann ebenfalls von der externen Steuereinrichtung genutzt werden, um die Mischereinrichtung zu steuern bzw. zu regeln. Insbesondere kann eine Stellgröße für das Ventilelement alternativ oder zusätzlich auf Grundlage des Sensorsignals des externen Sensors von der externen Steuereinrichtung erzeugt und ausgegeben werden. Der externe Sensor kann über eine eigene Kommunikationsschnittstelle mit der externen Steuereinrichtung verbunden sein. Ebenfalls ist es möglich, dass die Anbindung des zumindest einen externen Sensors auch über die beschriebene zweite Kommunikationsschnittstelle, welche mit der ersten Kommunikationsschnittstelle kommuniziert, erfolgt.

Dadurch, dass der zumindest eine externe Sensor unabhängig von der ersten Kommunikationsschnittstelle mit der externen Steuereinrichtung verbunden wird, wird die Montage weiter vereinfacht, da der externe Sensor so ohne weiteres beabstandet von dem Ventilgehäuse und dem Antrieb mit der ersten Kommunikationsschnittstelle angeordnet werden kann, da einer Verbindung dieser Elemente nicht erforderlich ist.

Bei dem zumindest einen internen Sensor und/oder dem zumindest einen externen Sensor handelt es sich weiter bevorzugt um einen Druck-, Temperatur- und/oder Durchflusssensor. Besonders bevorzugt kann es sich um einen kombinierten Druck- und Temperatursensor, weiter bevorzugt um einen kombinierten Differenzdruck- und Temperatursensor, handeln. Ein solcher Temperatursensor kann insbesondere an der Austrittsseite der Mischereinrichtung, d. h. beispielsweise im Bereich des ersten Anschlusses, wenn dieser den Ausgang bildet, angeordnet sein, um die Austrittstemperatur des durch das Ventilgehäuse strömenden Mediums zu erfassen. So kann diese Austrittstemperatur von der externen Steuereinrichtung durch Einstellen der Positionierung des Ventilelementes und damit des Mischungsverhältnisses zwischen den über den zweiten und den dritten Anschluss zugeführten Flüssigkeitsströmungen geregelt werden. Bevorzugt wird über einen Druck- oder Durchflusssensor der Durchfluss ermittelt, um gegebenenfalls sicherzustellen, dass der Öffnungsgrad des Ventiles ausreichend ist. Darüber hinaus kann beispielsweise der Durchfluss in einem der Strömungswege gemeinsam mit einer Temperatur der Einstellung des Mischungsverhältnisses zugrunde gelegt werden, um eine gewünschte Ausgangstemperatur bei einer gewünschten Ausgangsströmung zu erreichen.

Gemäß einer weiteren bevorzugten Ausführungsform der Erfindung ist der Antrieb in einem mit dem Ventilgehäuse verbundenen oder einstückig mit dem Ventilgehäuse ausgebildeten Motorgehäuse angeordnet, wobei vorzugsweise die interne Steuereinrichtung in dem Motorgehäuse oder einem mit dem Motorgehäuse verbundenen Elektronikgehäuse angeordnet ist. So sind Elektronikgehäuse, Motorgehäuse und Ventilgehäuse unmittelbar aneinander angeordnet bzw. aneinander befestigt oder ineinander integriert und bilden somit eine Baueinheit, welche vormontiert ausgeliefert und vom Heizungsmonteur als Ganzes in ein hydraulisches Heizungs- und/oder Kühlsystem eingebaut werden kann. Dadurch, dass die interne Steuereinrichtung unmittelbar an dem Motorgehäuse angeordnet ist, entfällt beim Einbau in eine Heiz- oder Kühlanlage der Montageaufwand für die elektrische Verbindung von Antrieb und interner Steuerelektronik. Durch die Integration bzw. Verbindung von Ventilgehäuse und Motorgehäuse entfällt ferner die Montage des Antriebs mit dem in dem Ventilgehäuse angeordneten Ventilelement, wie es bei bekannten Mischereinrichtungen häufig erforderlich ist.

Der zumindest eine interne Sensor kann mit der ersten Kommunikationsschnittstelle über eine intern im Ventil-, Motor- und/oder Elektronikgehäuse verlegte Leitungsverbindung verbunden sein. Gemäß einer bevorzugten Ausführungsform jedoch ist der interne Sensor mit der ersten Kommunikationsschnittstelle über ein außerhalb des Ventilgehäuses verlaufendes Kabel verbunden. Dies hat den Vorteil, dass im Inneren des Ventilgehäuses keine elektrischen Verbindungen angeordnet werden müssen, sodass der Isolationsaufwand verringert bzw. die Gefahr des Kontaktes elektrischer Bauteile mit der im Ventilgehäuse geführten Flüssigkeit vermieden wird. Trotz der Kabelverbindung kann jedoch der Sensor mit dem Ventilgehäuse und den übrigen Bauteilen eine Baueinheit bilden. Da, wie oben beschrieben, das Motor- oder Elektronikgehäuse Teil dieser Baueinheit ist, kann auch diese Kabelverbindung vormontiert mit ausgeliefert werden, sodass diese Verbindung nicht erst von dem Monteur vor Ort beim Einbau in das Heizungs- oder Kühlsystem hergestellt werden muss.

Die erste und die zweite Kommunikationsschnittelle sind besonders bevorzugt als drahtlose Kommunikationsschnittstellen, insbesondere als Funkschnittstellen, ausgebildet. Dies vereinfacht die Montage weiter, da keine Kabelverbindung zwischen der externen Steuereinrichtung und der internen Steuereinrichtung hergestellt werden muss. Die drahtlose Verbindung bzw. Funkverbindung kann besonders bevorzugt automatisch durch entsprechende Protokolle hergestellt werden. Zum Aufbau der Kommunikationsverbindung können an der ersten und/oder der zweiten Kommunikationsschnittstelle bzw. an der internen oder externen Steuereinrichtung auch Betätigungselemente vorgesehen sein, durch welche die Kommunikationsverbindung eingerichtet bzw. hergestellt wird. Beispielsweise können Taster vorgesehen sein, welche gedrückt werden müssen, um die Kommunikationsverbindung herzustellen, d. h. ein gegenseitiges Finden der ersten und der zweiten Kommunikationsschnittstelle zu ermöglichen. Darüber hinaus können die Kommunikationsschnittstellen so ausgebildet sein, dass sie eine Codierung bzw. eine Identifizierung ermöglichen und eine feste Verbindung zwischen genau einer ersten und zweiten Kommunikationsschnittstelle aufbauen. So wird es möglich, mehrere Mischereinrichtungen in unmittelbarer Nähe zu betreiben, ohne dass diese sich gegenseitig stören. Auch ist es möglich, dass eine externe Steuereinrichtung mit mehreren internen Steuereinrichtungen mehrerer Mischventile kommuniziert, um diese zu steuern bzw. zu regeln.

Besonders bevorzugt weist die erfindungsgemäße Heiz- oder Kühlanlagen-Mischereinrichtung darüber hinaus zumindest ein Umwälzpumpenaggregat auf, welches dazu dient, einen Wärmeträger, d. h. Flüssigkeit, durch die Strömungswege in dem Ventilgehäuse zu fördern. Dabei ist das Umwälzpumpenaggregat besonders bevorzugt mit einem der Anschlüsse des Ventilgehäuses verbunden oder verbindbar, beispielsweise mit dem als Ausgang dienenden ersten Anschluss. Bei dieser Verbindung wird das Umwälzpumpenaggregat so angeordnet, dass es die Flüssigkeit von dem ersten Anschluss weg fördert. Wenn das Ventil umgekehrt so eingesetzt wird, dass die Strömung, welche dem ersten Anschluss zugeführt wird, zu dem zweiten und dem dritten Anschluss hin geteilt wird, kann das Umwälzpumpenaggregat auch umgekehrt angeordnet werden, sodass es die Flüssigkeit zu dem ersten Anschluss hin fördert. Auch eine beabstandete Anordnung des Umwälzpumpenaggregates ist möglich. Zur mechanischen Verbindung zwischen Umwälzpumpenaggregat und Ventilgehäuse sind an dem Umwälzpumpenaggregat und dem zur Verbindung mit dem Umwälzpumpenaggregat vorgesehenen Anschluss des Ventilgehäuses bevorzugt korrespondierende Flansche ausgebildet, welche beispielsweise durch eine Schraub- oder Klemmverbindung miteinander verbunden werden können. Insbesondere handelt es sich hierbei um eine lösbare Verbindung, die es ermöglicht, das Umwälzpumpenaggregat von dem Ventilgehäuse zu trennen. Dies ermöglicht zum einen eine unabhängige Fertigung des Ventilgehäuses von dem Pumpengehäuse und zum anderen eine Demontierbarkeit zu Wartungs- oder Reparaturzwecken. Ferner wird so ein beabstandeter Einbau in ein hydraulisches System möglich. Die unabhängige Fertigung des Pumpengehäuses hat darüber hinaus wirtschaftliche Vorteile, da es nicht erforderlich ist, für die Mischereinrichtung ein speziell gefertigtes Pumpengehäuse vorzusehen, stattdessen kann bevorzugt ein Umwälzpumpenaggregat, welches auch für andere Zwecke eingesetzt werden kann, hier als Teil der erfindungsgemäßen Mischereinrichtung Verwendung finden.

Besonders bevorzugt ist die externe Steuereinrichtung Teil des Umwälzpumpenaggregates und dient weiter bevorzugt gleichzeitig der Steuerung bzw. Regelung des Umwälzpumpenaggregates. So kann die externe Steuereinrichtung bevorzugt zwei für die Temperaturregelung wesentlichen Größen direkt steuern, nämlich den Durchfluss durch die Ansteuerung des Umwälzpumpenaggregates und das Mischungsverhältnis zwischen den zweiten Strömungswegen im Ventilgehäuse durch Ansteuerung des Antriebs des Ventilelementes. So wird eine autonome Mischereinrichtung geschaffen, deren Steuerung vorzugsweise vollständig von einer Steuerelektronik, welche in das Umwälzpumpenaggregat integriert ist, übernommen wird. Ferner können so elektronische Bauteile eingespart werden, da beispielsweise Mikroprozessoren, welche ohnehin zur Steuerung des Umwälzpumpenaggregates, insbesondere zur Drehzahlsteuerung des Umwälzpumpenaggregates erforderlich sind, zur Steuerung der Ventileinrichtung mit verwendet werden können. Die externe Steuereinrichtung ist bevorzugt in ein Elektronikgehäuse bzw. einen Klemmenkasten des Umwälzpumpenaggregates integriert. Auch die zweite Kommunikationsschnittstelle, welche Teil der externen Steuereinrichtung ist, ist dabei bevorzugt mit in das Umwälzpumpenaggregat, insbesondere dessen Elektronikgehäuse integriert. So wird insgesamt eine einfache Montage erreicht, da lediglich ein elektrischer Anschluss des Umwälzpumpenaggregates und des Antriebes an dem Ventilgehäuse hergestellt werden muss und die Kommunikationsverbindung zwischen der ersten und der zweiten Kommunikationsschnittstelle hergestellt werden muss. Da letztere besonders bevorzugt drahtlos ausgebildet ist, ist dabei vorzugsweise keinerlei elektrische Verbindung direkt zwischen dem Umwälzpumpenaggregat und dem Antrieb bzw. der internen Steuereinrichtung erforderlich.

Weiter bevorzugt ist die externe Steuerung zur Steuerung und/oder Regelung der Stellung des Ventilelementes und/oder der Drehzahl des Umwälzpumpenaggregates auf Grundlage zumindest eines Ausgangssignales des zumindest einen internen Sensors und/oder zumindest einen externen Sensors ausgebildet und gibt an die interne Steuereinrichtung einen Sollwert für die Stellung des Ventilelementes aus. Wie beschrieben, sorgt die interne Steuereinrichtung dann dafür, dass das Ventilelement auf diesen Sollwert über den Antrieb eingestellt wird. So wird die gesamte Steuerung der Mischereinrichtung von der externen Steuereinrichtung übernommen, welche dazu mit den erforderlichen Sensoren kommuniziert. Das hat den Vorteil, dass die erforderliche Elektronik für die interne Steuereinrichtung, welche am oder in dem Motorgehäuse des Antriebes angeordnet werden muss, einfach gehalten werden kann, sodass hier ein kostengünstiger Aufbau möglich ist.

Gemäß einer weiteren bevorzugten Ausführungsform der Erfindung erfasst der zumindest eine interne Sensor eine Druckdifferenz zwischen einem der Anschlüsse und einem Aufnahmeraum, in welchem das Ventilelement angeordnet ist oder zwischen zweien der Anschlüsse. So wird vorzugsweise die Druckdifferenz ein- und ausgangsseitig der von dem Ventilelement gebildeten Querschnittsverengung in dem jeweiligen Strömungsweg erfasst. Auf Grundlage dieser Druckdifferenz ist es möglich, den Durchfluss durch diesen Strömungsweg im Ventilgehäuse zu bestimmen.

Besonders bevorzugt ist die externe Steuereinrichtung derart ausgestaltet, dass sie auf Grundlage zumindest einer von zumindest einem internen Sensor erfassten Druckdifferenz einen Durchfluss durch die Mischereinrichtung berechnet. Der interne Sensor ist dazu als Differenzdrucksensor ausgebildet und in dem Ventilgehäuse so angeordnet, dass er mit den erforderlichen Stellen des Strömungsweges, zwischen denen die Druckdifferenz bestimmt werden soll, in Verbindung ist. Die Bestimmung des Durchflusses erfolgt in der externen Steuereinrichtung vorzugsweise auf Grundlage der erfassten Druckdifferenz und der von der Steuereinrichtung vorgegebenen Stellung des Ventilelementes, durch welche der Steuereinrichtung der Öffnungsgrad des jeweiligen Strömungsweges bekannt ist. D. h. der Durchfluss kann in Kenntnis des bekannten Querschnittes des Strömungsweges und der Druckdifferenz bestimmt werden.

Gemäß einer weiteren bevorzugten Ausführungsform weist das Ventilgehäuse eine nach außen geöffnete Sensoraufnahme auf, in welche der zumindest eine Sensor von außen entnehmbar eingesetzt ist. Dies hat den Vorteil, dass der Sensor zu Wartungs- und Reparaturzwecken leicht entnommen und gegebenenfalls ausgetauscht werden kann. Der Sensor ist bevorzugt mit einer Dichtung versehen, sodass der Sensor, wenn er in die Sensoraufnahme eingesetzt ist, diese nach außen abdichtet, sodass keine Flüssigkeit aus dem Inneren des Sensorgehäuses durch die Sensoraufnahme nach außen austreten kann.

Vorzugsweise ist zumindest ein Erfassungsabschnitt bzw. Erfassungsbereich des zumindest einen internen Sensors in einem Sensorraum der Sensoraufnahme im Inneren des Ventilgehäuses angeordnet, wobei dieser Sensorraum über zumindest einen Verbindungskanal mit zumindest einem der Strömungswege verbunden ist und der Sensorraum außerhalb der Strömungswege gelegen ist. So wird der Sensor mit seinen Erfassungsbereichen außerhalb der Strömungswege angeordnet, sodass der Strömungsquerschnitt in den Strömungswegen durch den Sensor nicht beeinträchtigt wird.

Weiter bevorzugt ist der Sensorraum mit einem ersten Verbindungskanal mit einem der Strömungswege stromaufwärts des Ventilelementes und mit einem zweiten Verbindungskanal mit einem Aufnahmeraum, in welchem das Ventilelement angeordnet ist, verbunden. Dabei ist der zweite Verbindungskanal vorzugsweise an einer Stelle mit dem Aufnahmeraum verbunden, welche stromabwärts der durch das Ventilelement gebildeten Querschnittsverengung gelegen ist. So kann von dem Sensor die Druckdifferenz ein- und ausgangsseitig des durch das Ventilelement gebildeten Ventils erfasst werden.

Gemäß einer weiteren bevorzugten Ausführungsform der Erfindung sind der erste, der zweite und der dritte Anschluss, ein Aufnahmeraum, in welchem das Ventilelement angeordnet ist, sowie zumindest eine Sensoraufnahme für den zumindest einen internen Sensor in einem gemeinsamen einstückig ausgebildeten Abschnitt des Ventilgehäuses angeordnet. Besonders bevorzugt sind alle diese genannten Bauteile in einem einteilig bzw. einstückig ausgebildeten Ventilgehäuse angeordnet, wobei das Ventilgehäuse eventuell noch Deckel- oder Verschlusselemente aufweisen kann, um vorhandene Öffnungen zu verschließen, beispielsweise eine Öffnung, durch welche das Ventilelement in das Ventilgehäuse eingesetzt ist und durch welche sich eine Antriebswelle zur Bewegung des Ventilelementes in den Aufnahmeraum hinein erstreckt. Durch die einteilige bzw. einstückige Ausgestaltung wird die Teileanzahl reduziert und der Aufbau der Mischereinrichtung vereinfacht.

Wie oben ausgeführt, kann die erfindungsgemäße Mischereinrichtung sowohl zum Mischen zweier Fluidströme als auch zum Teilen eines Fluidstromes in zwei Fluidströme verwendet werden. Dabei kann beim Teilen das Verhältnis der erzeugten Teilströme zueinander eingestellt werden. Demgemäß kann in der erfindungsgemäßen Mischereinrichtung die Strömungsrichtung durch die Strömungswege entweder von dem zweiten Anschluss und dem dritten Anschluss ausgehend zu dem ersten Anschluss erfolgen, um eine Mischfunktion bereitzustellen, oder aber umgekehrt, von dem ersten Anschluss zu dem zweiten Anschluss und dem dritten Anschluss verlaufen, um eine Teilungsfunktion bereitzustellen.

Nachfolgend wird die Erfindung beispielhaft anhand der beigefügten Figuren beschrieben, in diese zeigt:
- Fig. 1: die Anordnung einer erfindungsgemäßen Heiz- oder Kühlanlagen-Mischereinrichtung mit einem Umwälzpumpenaggregat,
- Fig. 2: die Anordnung der Mischereinrichtung gemäß Fig. 1 in einer Hin- und Rücklaufleitung eines Heizungs- oder Kühlsystems,
- Fig. 3: schematisch die Anordnung einer erfindungsgemäßen Heiz- oder Kühlanlagen-Mischereinrichtung zur Mischung zweier Flüssigkeitsströmungen,
- Fig. 4: schematisch die Anordnung einer erfindungsgemäßen Heiz- oder Kühlanlagen Mischereinrichtung zum Teilen einer Flüssigkeitsströmung,
- Fig. 5: eine perspektivische Ansicht eines Ventilgehäuses einer erfindungsgemäßen Heiz- oder Kühlanlagen-Mischereinrichtung,
- Fig. 6: eine Schnittansicht des Ventilgehäuses gemäß Fig. 5 bei Verwendung der Mischereinrichtung zum Mischen zweier Flüssigkeitsströme und
- Fig. 7: Fig. 7 eine Schnittansicht des Ventilgehäuses gemäß Fig. 5 bei Verwendung der Mischereinrichtung zum Teilen einer Fluidströmung in zwei Teilströme.

Die in diesem Beispiel gezeigte Mischereinrichtung wird anhand der Verwendung in einer Heizungsanlage beschrieben. Es ist jedoch zu verstehen, dass die Mischereinrichtung in derselben Weise auch in einer Kühleinrichtung verwendet werden kann. In einer hydraulischen Heizungsanlage wird mithilfe der Mischereinrichtung einer warmen Vorlaufströmung kühlere Flüssigkeit aus dem Rücklauf zugemischt, um die Temperatur zu senken. In einer hydraulischen Kühleinrichtung wird umgekehrt einer kalten Vorlaufströmung wärmere Flüssigkeit aus einer Rücklaufströmung zugeführt, um die Vorlauftemperatur zu erhöhen. Die Mischereinrichtung ist auch für andere Anwendungen als die Temperaturregelung in einer hydraulischen Heiz- oder Kühlanlage einsetzbar. Die nachfolgende Beschreibung ist insofern nur als Beispiel zu verstehen und beschränkt den Einsatz der nachfolgend beschriebenen Mischereinrichtung nicht auf den hier beschriebenen Zweck.

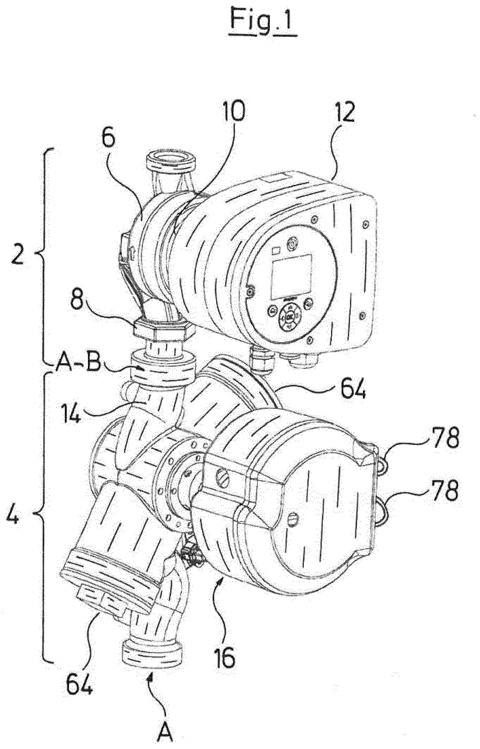

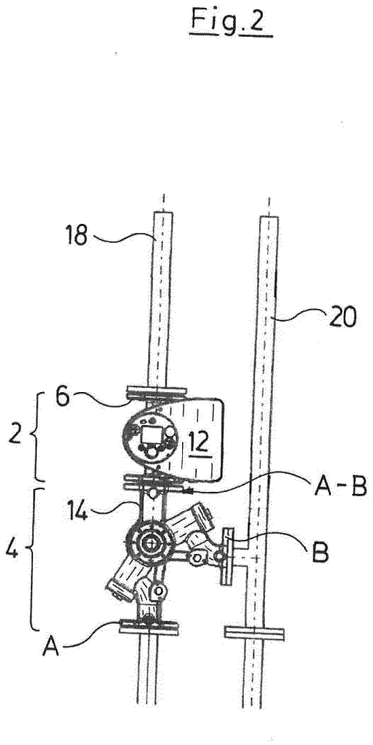

Die in den Figuren 1 bis 4 bezeigte Mischereinrichtung weist zwei wesentliche Komponenten auf, nämlich zum einen ein Umwälzpumpenaggregat 2 und zum anderen eine Ventilbaugruppe 4, welche getrennte Baugruppen bilden und in dem in Figuren 1 und 2 gezeigten Beispiel über eine Flanschverbindung oder eine Gewindeverbindung lösbar direkt miteinander verbunden sind.

Das Umwälzpumpenaggregat 2 ist in bekannter Weise ausgebildet und weist ein Pumpengehäuse 6 auf, in welchem ein hier nicht näher gezeigtes Laufrad rotiert. Das Pumpengehäuse 6 ist hier mit seinem Eingang bzw. Eingangsflansch 8 mit der Ventilbaugruppe 4 verbunden. An dem Pumpengehäuse 6 befestigt ist ein Stator- bzw. Motorgehäuse 10, in welchem ein elektrischer Antriebsmotor zum Antrieb des Laufrades angeordnet ist. An dem Motorgehäuse 10 ist ein Klemmenkasten bzw. Elektronikgehäuse 12 angebracht, in welchem sich die elektrischen Anschlüsse und eine Steuer- bzw. Regelelektronik zur Steuerung bzw. Regelung des Antriebsmotors in dem Motorgehäuse befinden. Insbesondere kann die Elektronik einen Drehzahlsteller mit einem Frequenzumrichter beinhalten.

Die Ventilbaugruppe 4 weist ein Ventilgehäuse 14 auf. An diesem ist ein Motorgehäuse 16 angeordnet, in welchem ein elektrischer Antriebs- bzw. Stellmotor (nachfolgend Antrieb 36) zur Bewegung eines Ventilelements in dem Ventilgehäuse angeordnet ist. Das Motorgehäuse 16 dient gleichzeitig als Elektronikgehäuse und beherbergt eine interne Steuereinrichtung, welche nachfolgend beschrieben werden wird. Das Ventilgehäuse 14 weist drei Anschlüsse A, B und A-B auf, wobei in Fig. 1 der Anschluss B durch das Motorgehäuse 16 in der Darstellung verdeckt ist. In dem hier gezeigten Beispiel weisen die Anschlüsse A, B und A-B Anschlussflansche zur Verbindung mit Rohrleitungen auf, wobei der Anschluss A-B direkt mit dem Eingang 8 des Pumpengehäuses 6 über eine Flanschverbindung lösbar verbunden ist.

Im Inneren des Ventilgehäuses 14 sind die Anschlüsse A, B und AB so miteinander verbunden, dass die Strömungswege von den beiden Anschlüssen A und B zu dem Anschluss A-B verlaufen. Ein erster Strömungsweg verläuft von dem Anschluss A zu dem Anschluss A-B, ein zweiter Strömungsweg verläuft von dem Anschluss B zu dem Anschluss A-B. So können zwei durch die Anschlüsse A und B zugeführten Strömungen gemischt werden und gemeinsam aus dem Anschluss A-B austreten. Alternativ kann in umgekehrter Richtung bei Zufuhr einer Strömung in den Anschluss A-B diese Strömung in zwei Teilströmungen durch die Anschlüsse A und B aufgeteilt werden.

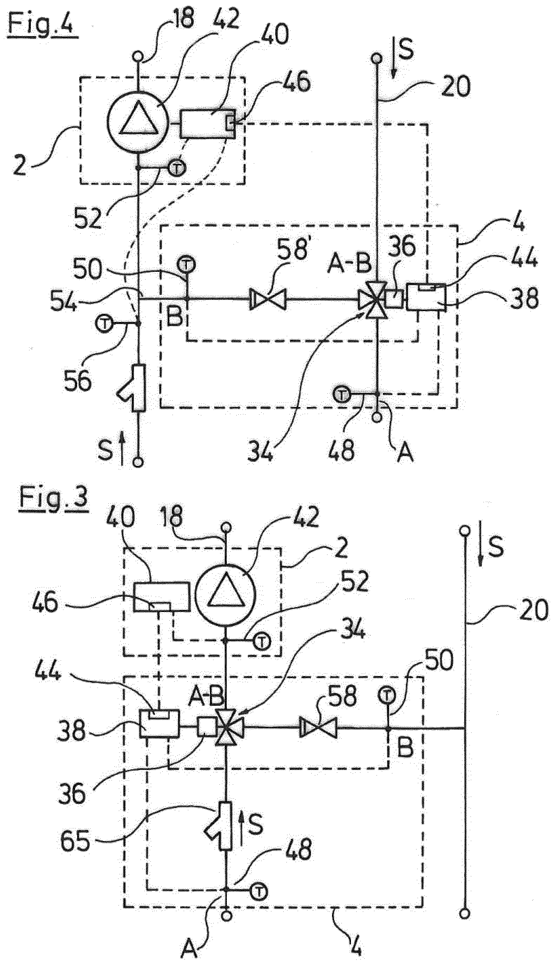

Fig. 2 zeigt eine erste beispielhafte Anordnung der Mischereinrichtung in einem Heizungssystem, wobei in dieser Darstellung das Motorgehäuse 16 der Ventilbaugruppe 4 weggelassen wurde. In dem in Fig. 2 gezeigten Beispiel ist die Mischereinrichtung bestehend aus Umwälzpumpenaggregat 2 und Ventilbaugruppe 4 in einer Vorlaufleitung 18 angeordnet, sodass die Flüssigkeitsströmung in der Vorlaufleitung 18 von dem Anschluss A durch das Ventilgehäuse 14 zu dem Anschluss A-B und anschließend durch das Pumpengehäuse 6 verläuft. Der Anschluss B des Ventilgehäuses 14 ist mit einer Rücklaufleitung 20, beispielsweise eines Heizkreises, verbunden. D. h. durch die Vorlaufleitung 18 wird ein erwärmter Wärmeträger, insbesondere Wasser, einem Verbraucher zugeführt. Der abgekühlte Wärmeträger strömt durch die Rücklaufleitung 20 zurück. Über den Anschluss B kann durch das Ventilgehäuse 14 der Strömung in der Vorlaufleitung 18 ein Teil der Wärmeträgerströmung aus der Rücklaufleitung 20 zugemischt werden, um die Vorlauftemperatur zu reduzieren. Diese Anordnung ist schematisch auch in Fig. 3 gezeigt, anhand derer der interne Aufbau und die Funktionsweise der Mischereinrichtung näher beschrieben wird.

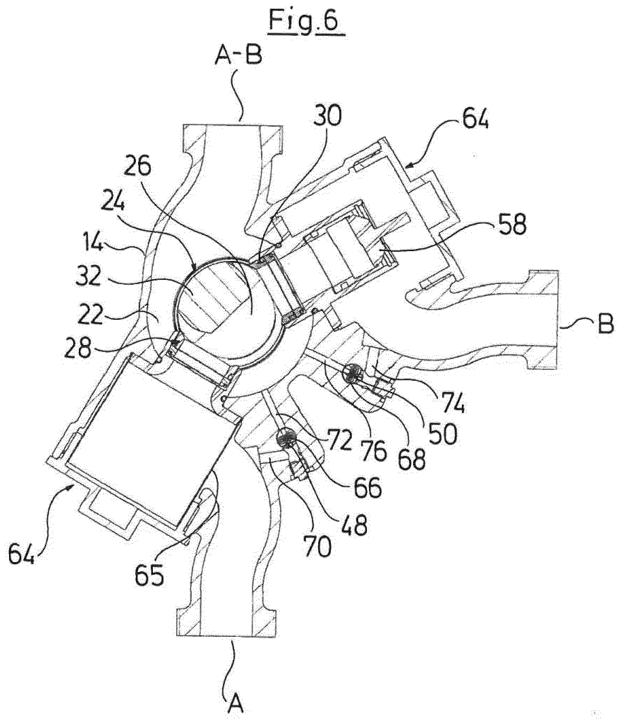

Im Inneren des Ventilgehäuses 14 ist ein Aufnahmeraum ausgebildet, in welchem ein bewegliches Ventilelement 24, hier in Form einer Ventilkugel, angeordnet ist. Das Ventilelement 24 weist eine Ausnehmung 26 auf, welche einen Strömungsweg durch das Ventil mit unterschiedlichem Querschnitt freigeben kann. Die Anschlüsse A, B und A-B stehen mit dem Aufnahmeraum 22 in Verbindung. Dabei ist in dem Strömungsweg von dem Anschluss A zu dem Aufnahmeraum 22 ein Ventilsitz 28 und in dem Strömungsweg von dem Anschluss B zu dem Aufnahmeraum 22 ein Ventilsitz 30 gelegen, an welchen das Ventilelement 24 dichtend zur Anlage kommt. Je nachdem wie das Ventilelement 24 über den Motor gedreht ist, kann der geschlossene Teil 32 einen der Ventilsitze 28 oder 30 vollständig verschließen oder nur teilweise verschließen. In der in Fig. 6 gezeigten Position sind beide Strömungswege geöffnet, sodass ein Strömungsdurchgang sowohl von dem Anschluss A als auch von dem Anschluss B in das Innere des Aufnahmeraumes 22 und von diesem zu dem Anschluss A-B gegeben ist. Je nach Drehung des Ventilelementes 24 kann der geschlossene Teil 32 des Ventilelementes 24 einen der Ventilsitze 28, 30 ganz oder teilweise verschließen. So kann das Mischungsverhältnis der beiden durch die Anschlüsse A und B zugeführten Strömungen zueinander reguliert werden. Umgekehrt kann das Verhältnis der Aufteilung einer durch den Anschluss A-B zugeführten Strömung zu den Anschlüssen A und B reguliert werden.

In Fig. 3 ist die Verwendung der Mischereinrichtung zum Mischen zweier Flüssigkeiten gezeigt, wie es anhand von Fig. 2 beschrieben wurde. Durch die gestrichelten Linien sind das Umwälzpumpenaggregat 2 mit seinen integrierten Komponenten und die Ventilbaugruppe 4 dargestellt, d. h. alle Komponenten innerhalb dieser gestrichelten Linien sind Teil des Umwälzpumpenaggregates 2 bzw. der Ventilbaugruppe 4. Wesentlicher Bestandteil der Ventilbaugruppe 4 ist das eigentliche Ventil 34, welches von den Ventilsitzen 28, 30, dem Aufnahmeraum 22 und dem Ventilelement 24 gebildet wird, welche in den Figuren 3 und 4 nicht im Detail dargestellt sind. An dem Ventil 34 ist ein Antrieb 36, beispielsweise in Form eines Antriebsmotors, insbesondere eines Schrittmotors angeordnet. Dieser Antrieb 36 wird von einer internen Steuereinrichtung 38 angesteuert. Die in dem Elektronikgehäuse 12 des Pumpenaggregates 2 angeordnete Steuerelektronik bildet gleichzeitig eine externe Steuereinrichtung 40. Die Elektronik der externen Steuereinrichtung 40 dient zum einen der Steuerung des Pumpenaggregates 2 und insbesondere des Antriebsmotors 42, welche in dem Motorgehäuse 10 (siehe Fig. 1) angeordnet ist, und zum anderen auch der Steuerung bzw. Regelung des Ventils 34 der Ventilbaugruppe 4.

Die interne Steuereinrichtung 38, welche den Antrieb 36 unmittelbar ansteuert und bevorzugt einen Teil des Antriebs 36 bildet, weist eine erste Kommunikationsschnittstelle 44 auf. Die externe Steuereinrichtung 40, welche Teil des Pumpenaggregates 2 ist, weist eine zweite Kommunikationsschnittstelle 46 auf, welche korrespondierend zu der ersten Kommunikationsschnittstelle 44 ausgebildet ist, sodass zwischen den Kommunikationsschnittstellen 44 und 46 Daten übertragen bzw. ausgetauscht werden können. Bevorzugt sind die Kommunikationsschnittstellen 44 und 46 als Funkschnittstellen ausgebildet, sodass eine drahtlose Datenkommunikation zwischen dem Umwälzpumpenaggregat 2 und der Ventilbaugruppe 4 bzw. deren interner Steuereinrichtung 38 möglich ist.

Die externe Steuereinrichtung 40 dient der eigentlichen Steuerung der Ventilbaugruppe 4 und insbesondere des Ventils 34, das heißt die externe Steuereinrichtung 40 gibt die Stellung bzw. einzunehmende Position des Ventilelementes 24 vor. Die externe Steuereinrichtung 40 gibt somit das einzustellende Mischungsverhältnis zwischen den beiden Strömungswegen durch die Anschlüsse A und B vor, das heißt in welchem Verhältnis die Öffnungen der Ventilsitze 28 und 30 durch Positionierung des Ventilelementes 34 gebracht werden sollen. Dieser Positionssollwert für das Ventilelement 34 wird über die zweite Kommunikationsschnittstelle 46 an die erste Kommunikationsschnittstelle 44 und damit an die interne Steuereinrichtung 38 übertragen. Diese regelt dann wiederum den Antrieb 36 so, dass das Ventilelement 24 seine gewünschte Position einnimmt. Der Antrieb 36 kann, wie ausgeführt, als Schrittmotor ausgebildet sein oder aber gegebenenfalls einen Positionssensor enthalten, welcher die tatsächliche Positionierung des Ventilelementes 24 erfasst und der internen Steuereinrichtung 38 meldet, welche den Antrieb 36 dann so regelt, dass das Ventilelement 24 in die von der externen Steuereinrichtung 40 vorgegebene Sollposition gebracht wird.

Die interne Steuereinrichtung 38 dient jedoch nicht nur der Steuerung bzw. Regelung des Antriebes 36, sondern auch der Übertragung von Sensorsignalen von zwei internen Sensoren 48 und 50. Die Sensoren 48 und 50 sind hier als Temperatursensoren ausgebildet, welche zum einen die Temperatur im Zuganschluss 8 bzw. zwischen dem Anschluss A und dem Aufnahmeraum 22, wobei der zweite Temperatursensor 50 die Temperatur des Fluids in den Strömungsweg zwischen dem Anschluss B und dem Ventil 34 bzw. dem Aufnahmeraum 22 erfasst. Die erfassten Temperaturwerte werden an die interne Steuereinrichtung 38 übermittelt, welche sie dann über die erste Kommunikationsschnittstelle 44 an die zweite Kommunikationsschnittstelle 46 überträgt. So werden die erfassten Temperaturwerte der externen Steuereinrichtung 40 in den Pumpenaggregat 2 zugeführt. Eine Verarbeitung der Signale der internen Sensoren 48 und 50 in der internen Steuereinrichtung 38 erfolgt nicht. Wie weiter unten anhand von Figur 6 erläutert werden wird, handelt es sich bei den Sensoren 48 und 50 um kombinierte Temperaturdrucksensoren, welche darüber hinaus noch einen Differenzdruck zwischen den Anschlüssen und dem Aufnahmeraum 22 erfassen. Auf Grundlage dieser Differenzdrück, welche ebenfalls auf dem genannten Weg über die interne Steuereinrichtung 38 und die Kommunikationsschnittstellen 44 und 46 an die externe Steuereinrichtung 40 übertragen werden, lassen sich in Kenntnis des Öffnungsgrades des Ventiles 34 die Durchflüsse durch die Anschlüsse A und B ermitteln. Ein weiterer Sensor 52 in Form eines Temperatursensors ist in das Umwälzpumpenaggregat 2, insbesondere in das Pumpengehäuse 6, integriert und erfasst die Eingangstemperatur im Eingang des Umwälzpumpenaggregates 2. Dieses Temperatursignal wird ebenfalls an die externe Steuereinrichtung 40 übermittelt. Auf Grundlage der Signale von den Sensoren 48, 50, 52 kann die externe Steuereinrichtung 40 zum Einstellen einer gewünschten Solltemperatur am Punkt des Sensors 52 das Ventil 34 der Ventilbaugruppe 4 so regeln, dass ein erforderliches Mischungsverhältnis von den Strömungen durch die Anschlüsse A und B durch Positionierung des Ventilelementes 24 eingestellt wird.

Wie zu erkennen ist, sind in die Ventilbaugruppe 4 alle wesentlichen Bauteile für die Mischeinrichtung mit Ausnahme der externen Steuereinrichtung integriert. So sind das Ventil 34 mit dem verstellbaren Ventilelement 24, dessen Antrieb 36 sowie die erforderlichen internen Sensoren 48 und 50 in eine Baugruppe integriert. Ferner ist eine interne Steuereinrichtung 38 integriert, welche die Lageregelung des Ventilelementes 24 über den Antrieb 36 übernimmt und der Datenübertragung zu der externen Steuereinrichtung 40 über eine integrierte Kommunikationsschnittstelle 44 dient. Eine Steuereinrichtung zur Steuerung des Mischsystems ist hier nicht vorhanden. Die Funktion der Steuereinrichtung wird von externen Steuereinrichtung 40 wahrgenommen, welche hier Teil des Pumpenaggregates 2 ist, so kann der in dem Pumpenaggregat 2 ohnehin erforderliche Mikroprozessor zur Steuerung des Pumpenaggregates für diese zusätzliche Steueraufgabe verwendet werden. Es könnte jedoch auch eine von dem Pumpenaggregat unabhängige externe Steuereinrichtung vorgesehen sein. Da zwischen den Kommunikationsschnittstellen 44 und 46 vorzugsweise eine drahtlose Kommunikation vorgesehen ist, ist keine direkte elektrische Verbindung zwischen dem Umwälzpumpenaggregat 2 und der Ventilbaugruppe 4 erforderlich. Vielmehr müssen die Ventilbaugruppe 4 und das Umwälzpumpenaggregat 2 lediglich mit Energie, vorzugsweise über einen Netzanschluss versorgt werden. Die Kommunikationsschnittstellen 44 und 46 sind vorzugsweise so ausgebildet, dass sie automatisch eine Kommunikation miteinander aufbauen. Da das Umwälzpumpenaggregat 2 und die Ventilbaugruppe 4 bevorzugt unmittelbar aneinander angeordnet werden, ist eine sehr geringe Sendeleistung für die Funkübertragung ausreichend.

Das Ausführungsbeispiel gemäß Figur 4 unterscheidet sich von dem Ausführungsbeispiel gemäß Figur 3 lediglich durch den Einbauort des Ventils 34. Hier wird das Ventil 34 nicht zum Mischen zweier Strömungen sondern zur Aufteilung einer Strömung verwendet. Im Ergebnis wird jedoch wiederrum dem Vorlauf ein Teil des Rücklaufs zugemischt, wie nachfolgend erläutert werden wird. Bei dem Ausführungsbeispiel gemäß Fig. 4 werden dieselbe Ventilbaugruppe 4 und dasselbe Umwälzpumpenaggregat 2 verwendet. Das Umwälzpumpenaggregat 2 ist wie auch in dem Ausführungsbeispiel gemäß Fig. 3 in einer Vorlaufleitung bzw. in einem Vorlauf 18 angeordnet, sodass es einen Wärmeträger, wie beispielsweise Wasser, durch den Vorlauf 18 fördert. In diesem Ausführungsbeispiel ist die Ventilbaugruppe 4 jedoch nicht direkt mit dem Umwälzpumpenaggregat 2 verbunden sondern in der Rücklaufleitung 20 angeordnet, und zwar so, dass der Anschluss A-B der Ventilbaugruppe 4 als Eingang fungiert und der Anschluss A als Ausgang der Rücklaufleitung 20. Der Anschluss B ist an einem Knotenpunkt 54 stromaufwärts des Umwälzpumpenaggregates 2 mit der Vorlaufleitung 18 verbunden. Auch so wird eine Mischeinrichtung geschaffen, welche dem Vorlauf 18 an dem Knotenpunkt 54 Wärmeträger aus der Rücklaufleitung 20 zumischen kann. Die Menge des zugemischten Wärmeträgers aus der Rücklaufleitung 20 hängt von der Position des Ventilelementes 34 ab, welches das Verhältnis der Öffnungen bzw. der Öffnungsgrade der Strömungswege zu den Anschlüssen A und B im Verhältnis zueinander verändert. So kann im Extremfall der Strömungsweg zu dem Anschluss A geschlossen sein, sodass der gesamte Rücklauf durch den Anschluss B wieder in die Vorlaufleitung 18 geleitet wird. Im anderen Extremfall kann der Anschluss B verschlossen sein, sodass kein Zumischen in die Vorlaufleitung 18 erfolgt und die gesamte Strömung in der Rücklaufleitung 20 zu dem Anschluss A geleitet wird. Auch hier wird die Steuerung des Ventiles 34 bzw. die Vorgabe des Öffnungsgrades bzw. der Positionierung des Ventilelementes 24 von der externen Steuereinrichtung 40 in dem Umwälzpumpenaggregat 2 vorgegeben und über die Kommunikationsschnittstellen 46 und 44 zu der Ventilbaugruppe 4 übertragen. In umgekehrter Richtung werden die Messwerte von den internen Sensoren 48 und 50 an die externe Steuereinrichtung 40 übertragen, wie es vorangehend beschrieben wurde.

Zusätzlich zu dem Temperatursensor 52 in dem Umwälzpumpenaggregat 2 ist in diesem Ausführungsbeispiel noch ein externer Temperatursensor 56 in der Vorlaufleitung 18 stromaufwärts des Knotenpunktes 54 angeordnet, um die Temperatur des Wärmeträgers stromaufwärts des Knotenpunktes 54 zu erfassen. Der Temperatursensor 56 ist ebenfalls mit der externen Steuereinrichtung 40, beispielsweise über ein Kabel oder auch über eine drahtlose Kommunikationsverbindung verbunden. So kann die externe Steuereinrichtung 40 die Temperatur des Wärmeträgers stromaufwärts und stromabwärts des Knotenpunktes 54 erfassen. Darüber hinaus werden die Temperaturen im Rücklauf 20 über den Sensor 48 und/oder den Sensor 50 erfasst. Auf Grundlage dieser Größen kann das gewünschte Mischungsverhältnis, in welchem Wärmeträger aus dem Rücklauf 20 dem Vorlauf 18 zugemischt werden muss, von der externen Steuereinrichtung 40 bestimmt werden. Darüber hinaus können die Durchflüsse über die Differenzdrucksensoren 48 und 50, wie vorangehend beschrieben, ermittelt werden.

In den Ausführungsformen gemäß Figuren 3 und 4 ist in dem Strömungsweg von dem Anschluss B zu dem Ventil 34 bzw. dem Aufnahmeraum 22 jeweils ein Rückschlagventil 58 bzw. 58' angeordnet. Das Rückschlagventil 58 ist so angeordnet, dass nur eine Strömung von dem Anschluss B zu dem Ventil 34 bzw. dessen Aufnahmeraum 22 möglich ist. Das Rückschlagventil 58' ist umgekehrt angeordnet, sodass nur eine Strömung von dem Ventil 34 bzw. dessen Aufnahmeraum 22 zu dem Anschluss B möglich ist. Die Rückschlagventile 58, 58' können einen identischen Aufbau aufweisen und lediglich umgekehrt in das Ventilgehäuse 14 eingesetzt sein.

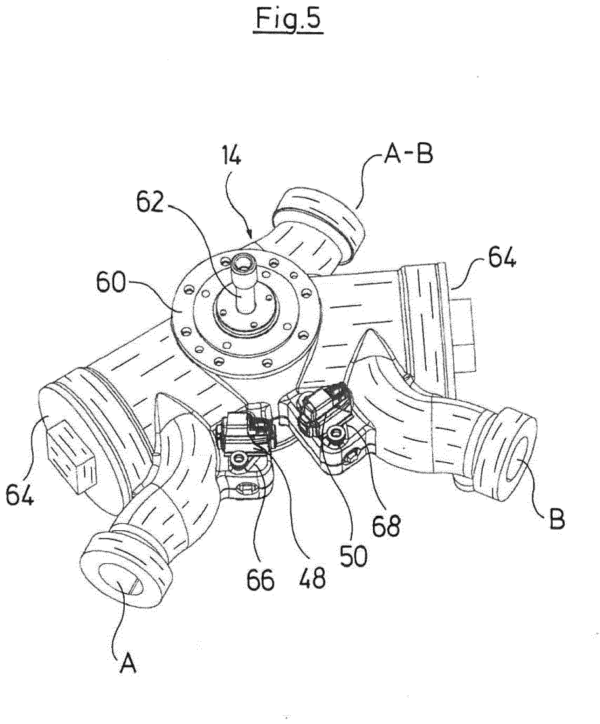

Der Aufbau des Ventilgehäuses wird nun näher anhand der Figuren 5 bis 7 beschrieben. Das Ventilgehäuse ist vorzugsweise einstückig aus Metall, insbesondere als Gussbauteil ausgebildet und weist neben den Anschlüssen A, B und A-B eine Öffnung 60 auf, durch welche das Ventilelement 24 in den Aufnahmeraum 22 eingesetzt ist. Die Öffnung 60 ist in Figur 5 durch einen Deckel 60 verschlossen, durch welchen sich eine Welle 62 nach außen erstreckt. Die Welle 62 ist im Inneren des Ventilgehäuses 14 drehfest mit dem Ventilelement 24 verbunden und wird außen drehfest mit dem Antrieb 36 verbunden. Ferner weist das Ventilgehäuse 14 zwei Montageöffnungen 64 auf, welche im Betrieb ebenfalls durch einen Deckel dicht verschlossen sind, wie in den Figuren 5 und 6 dargestellt. Die Montageöffnungen 64 sind jeweils einem der Anschlüsse A und B zugeordnet und dienen dazu, die Ventilsitze 28 und 30 sowie das Rückschlagventil 58, 58' in das Ventilgehäuse 14 einsetzen zu können. Das Rückschlagventil 58 oder gegebenenfalls 58' ist somit ebenfalls direkt in das Ventilgehäuse 14 integriert. Alternativ oder zusätzlich zu den Rückschlagventilen 58, 58' können durch die Montageöffnungen 64 auch Filter- bzw. Siebelemente eingesetzt werden, welche dann im Strömungsweg von den Anschlüssen A, B zu dem Aufnahmeraum 22 gelegen sind.

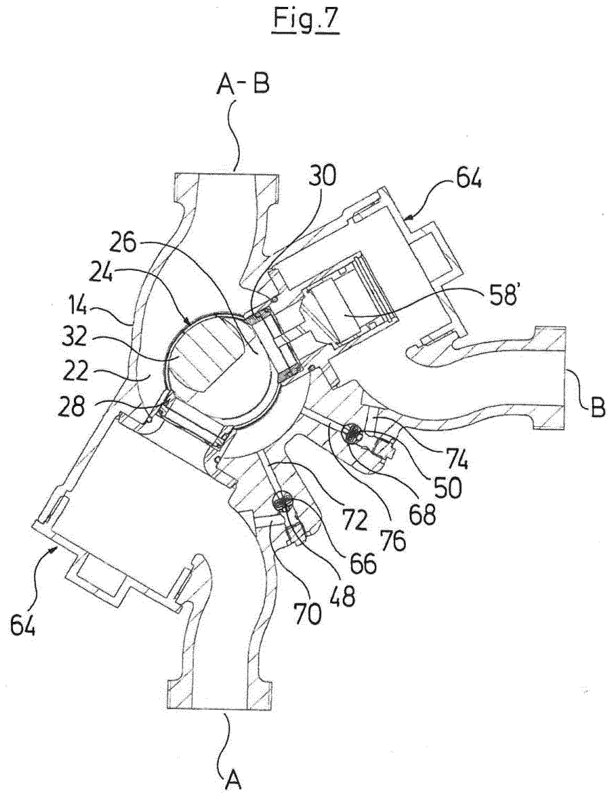

In Fig. 6 ist eine Anordnung gezeigt, welche der Anwendung gemäß Fig. 3 entspricht. In Fig. 6 ist das Mischerventil zum Mischen zweier Strömungen konfiguriert. Dazu ist im Strömungsweg von dem Anschluss B zu dem Aufnahmeraum 22 ein Rückschlagventil 58 angeordnet, welches in der Strömungsrichtung vom Anschluss B zu dem Anschluss A-B öffnet. Fig. 7 zeigt im Unterschied dazu die Konfiguration der Mischereinrichtung zur Anwendung in dem in Fig. 4 gezeigten Anwendungsfall, in welchem die Mischereinrichtung zum Teilen einer Strömung eingesetzt wird, d. h. der Strömungsrichtung von dem Anschluss A-B zu den Anschlüssen A und B gerichtet ist. In diesem Fall ist in dem Strömungsweg von dem Aufnahmeraum 22 zu dem Anschluss B das Rückschlagventil 58' angeordnet, welches in der Strömungsrichtung von dem Anschluss A-B zu dem Anschluss B öffnet. In den in Figuren 6 und 7 gezeigten Beispielen ist jeweils nur ein Rückschlagventil 58 bzw. 58' in dem Strömungsweg, welcher sich an den Anschluss B anschließt, gezeigt. Es ist jedoch zu verstehen, dass alternativ oder zusätzlich auch in dem sich an den Anschluss A anschließenden Strömungsweg ein entsprechend ausgebildetes Rückschlagventil 58 oder 58' angeordnet sein könnte. Im Übrigen sind die in Figuren 6 und 7 gezeigten Mischereinrichtungen gleich ausgebildet.

In Fig. 6 ist in dem Strömungsweg von dem Anschluss A zu dem Ausnahmeraum 22 darüber hinaus ein durch die Montageöffnung 64 eingesetzter Siebeinsatz 65 gezeigt, welcher dazu dient, Verunreinigungen, welche in der über den Anschluss A zugeführten Strömung enthalten sind, zurückzuhalten, sodass diese nicht das eigentliche Ventil bestehend aus Ventilelement 24 und dem Ventilsitz 28 in seiner Funktion beeinträchtigen können. Der Filter bzw. Siebeinsatz ist ebenfalls in Fig. 3 in der Zuleitung zu dem Ventil 34 gezeigt. Es ist zu verstehen, dass ein entsprechender Siebeinsatz 65 auch in dem Strömungsweg ausgehend von dem Anschluss B in entsprechender Weise angeordnet werden könnte. Darüber hinaus könnte auch bei der Anordnung gemäß Fig. 7 ein solcher Siebeinsatz in eine oder beide Montageöffnungen 64 eingesetzt sein. Der Siebeinsatz 65 ist als ein rohrförmiges Sieb ausgebildet. Zu Reinigungszwecken kann er aus der Montageöffnung 64 entnommen werden.

An dem Ventilgehäuse 14 sind darüber hinaus zwei Sensoraufnahmen 66 und 68 ausgebildet, wobei in die Sensoraufnahme 66 der Sensor 48 und in die Sensoraufnahme 68 der Sensor 50 eingesetzt ist. Die Sensoraufnahmen 66 und 68 weisen nach außen geöffnete Öffnungen auf, durch welche die Sensoren 48 und 50 eingesetzt werden, wobei die Sensoren 48 und 50 die Öffnungen dicht nach außen verschließen. Ein Sensorraum der Sensoraufnahme 66 ist über einen ersten Verbindungskanal mit dem ersten Verbindungskanal 70 mit dem Strömungsweg von dem Anschluss A zu dem Aufnahmeraum 22 stromaufwärts des Ventilsitzes 48 und über einen zweiten Verbindungskanal 72 direkt mit dem Aufnahmeraum 22 verbunden. So kann der in der Sensoraufnahme 66 angeordnet Sensor 48 zum einen die Temperatur in dem Strömungsweg, welche sich an den Anschluss A anschließt, bestimmen und zum anderen den Differenzdruck zwischen diesem Strömungsweg und dem Aufnahmeraum 22 bestimmen. Entsprechend ist ein Sensorraum der Sensoraufnahme 68 über einen ersten Verbindungskanal 74 mit dem Strömungsweg von dem Anschluss B zu dem Aufnahmeraum 22 stromaufwärts des Ventilsitzes 30 und über einen zweiten Verbindungskanal 76 direkt mit dem Aufnahmeraum 22 verbunden. So kann der in die Sensoraufnahme 68 eingesetzte Sensor 50 zum einen die Temperatur in dem Strömungsweg ausgehend von dem Anschluss B und zum anderen die Druckdifferenz zwischen diesem Strömungsweg und dem Aufnahmeraum 22 bestimmen. Dabei herrscht in dem Aufnahmeraum 22 im Wesentlichen der Druck ausgangsseitig des Ventils, das heißt stromabwärtig der beiden Ventilsitze 28 und 30, wenn das Ventil in der Figur 3 gezeigten Weise eingesetzt wird. Alternativ könnten die zweiten Verbindungskanäle 72 und 76 auch mit dem Strömungsweg zwischen dem Aufnahmeraum 22 und dem Anschluss A-B verbunden sein.

Wesentlich bei dem Ausführungsbeispiel gemäß Figuren 5 und 6 ist, dass die Sensoraufnahmen 66 und 68 bzw. deren Sensorräume, in denen die eigentlichen Sensor- bzw. Erfassungsbereiche der Sensoren 48 und 50 zu liegen kommen, mit den dazugehörigen Verbindungskanälen ebenfalls in das einstückig ausgebildete Ventilgehäuse 14 integriert sind, sodass das Ventilgehäuse 14 den wesentlichen Bestandteil der Ventilbaugruppe 4 bildet und lediglich noch mit dem Antrieb 36 verbunden werden muss. Der Antrieb 36 wird, wie beschrieben, mit der Welle 62 verbunden. In den Antrieb 36 bzw. dessen Motorgehäuse 16 ist bevorzugt die interne Steuereinrichtung 38 integriert. Die internen Sensoren 48 und 50, welche direkt in das Ventilgehäuse 14 eingesetzt sind, sind, wie in Fig. 1 gezeigt, über Kabel 78 mit der internen Steuereinrichtung 38 in dem Motorgehäuse 16 verbunden. So sind alle elektrischen Verbindungen außerhalb des Ventilgehäuses 14 angeordnet, sodass diese vor Feuchtigkeit geschützt sind.

### Bezugszeichenliste

- 2: Umwälzpumpenaggregat
- 4: Ventilbaugruppe
- 6: Pumpengehäuse
- 8: Eingang
- 10: Motorgehäuse bzw. Statorgehäuse
- 12: Elektronikgehäuse
- 14: Ventilgehäuse
- 16: Motorgehäuse
- 18: Vorlauf bzw. Vorlaufleitung
- 20: Rücklauf bzw. Rücklaufleitung
- 22: Aufnahmeraum
- 24: Ventilelement
- 26: Ausnehmung
- 28, 30: Ventilsitze
- 32: geschlossener Teil
- 34: Ventil
- 36: Antrieb
- 38: interne Steuereinrichtung
- 40: externe Steuereinrichtung
- 42: Antriebsmotor
- 44: erste Kommunikationsschnittstelle
- 46: zweite Kommunikationsschnittstelle
- 48, 50, 52: Sensoren
- 54: Knotenpunkt
- 56: Temperatursensor
- 58, 58': Rückschlagventile
- 60: Öffnung
- 62: Welle
- 64: Montageöffnung
- 65: Siebeinsatz
- 66, 68: Sensoraufnahmen mit Sensorräumen
- 70: erster Verbindungskanal
- 72: zweiter Verbindungskanal
- 74: erster Verbindungskanal
- 76: zweiter Verbindungskanal
- 78: Kabel
- A, B, A-B: Anschlüsse
- S: Strömungsrichtung

## Patentansprüche

1. Heiz- oder Kühlanlagen-Mischereinrichtung mit einem Ventilgehäuse (14), welches einen ersten (A-B), einen zweiten (A) und einen dritten Anschluss (B) aufweist sowie einen ersten Strömungsweg von dem ersten Anschluss (A-B) zu dem zweiten Anschluss (A) und einen zweiten Strömungsweg von dem ersten Anschluss (A-B) zu dem dritten Anschluss (B) definiert, wobei im Inneren des Ventilgehäuses (14) in den beiden Strömungswegen ein bewegliches Ventilelement (24) angeordnet ist, welches derart ausgestaltet und angeordnet ist, dass durch Verlagern des Ventilelementes (24) das Verhältnis der Querschnitte der beiden Strömungswege zueinander variierbar ist,
wobei
an dem Ventilgehäuse (14) ein Antrieb (36) zum Bewegen des Ventilelementes (24) angeordnet ist,
wobei in oder an dem Ventilgehäuse zumindest ein interner Sensor (48, 50) angeordnet ist, **dadurch gekennzeichnet, dass** der Antrieb (36) eine interne Steuereinrichtung (38) zur Bewegungssteuerung des Antriebes (36) aufweist,
die interne Steuereinrichtung (38) eine erste Kommunikationsschnittstelle (44) zur Kommunikation mit einer externen Steuereinrichtung (40) aufweist, welche eine korrespondierende zweite Kommunikationsschnittstelle (46) aufweist, und
der in oder an dem Ventilgehäuse (14) angeordnete zumindest eine interne Sensor (48, 50) mit der ersten Kommunikationsschnittstelle (44) zur Übertragung eines Sensorsignals zu der externen Steuereinrichtung (40) verbunden ist.

2. Heiz- oder Kühlanlagen-Mischereinrichtung nach Anspruch 1, **dadurch gekennzeichnet, dass** die interne Steuereinrichtung (38) ausgebildet ist, über den Antrieb (36) eine von der externen Steuereinrichtung (40) vorgegebene Stellung des Ventilelementes (24) einzustellen und vorzugsweise zu regeln.

3. Heiz- oder Kühlanlagen-Mischereinrichtung nach Anspruch 1 oder 2, **dadurch gekennzeichnet, dass** der zumindest eine Sensor (48, 50) in dem Ventilgehäuse (14) an oder in einem der Strömungswege angeordnet ist, um zumindest eine Zustandsgröße des sich im Strömungsweg befindlichen Mediums zu erfassen.

4. Heiz- oder Kühlanlagen-Mischereinrichtung nach einem der vorangehenden Ansprüche, **gekennzeichnet durch** zumindest einen externen, außerhalb des Ventilgehäuses (14) angeordneten Sensor (52, 56), welcher mit der externen Steuereinrichtung (40), vorzugsweise getrennt von zumindest der ersten Kommunikationsschnittstelle (44), verbunden ist.

5. Heiz- oder Kühlanlagen-Mischereinrichtung nach einem der vorangehenden Ansprüche, **dadurch gekennzeichnet, dass** der zumindest eine interne Sensor (48, 50) und/oder der zumindest eine externe Sensor ein Druck-, Temperatur- und/oder Durchflusssensor ist.

6. Heiz- oder Kühlanlagen-Mischereinrichtung nach einem der vorangehenden Ansprüche, **dadurch gekennzeichnet, dass** der Antrieb (36) in einem mit dem Ventilgehäuse (14) verbundenen oder einstückig mit dem Ventilgehäuse (14) ausgebildeten Motorgehäuse (16) angeordnet ist, wobei vorzugsweise die interne Steuereinrichtung (38) in dem Motorgehäuse (16) oder einem mit dem Motorgehäuse (16) verbundenen Elektronikgehäuse angeordnet ist.

7. Heiz- oder Kühlanlagen-Mischereinrichtung nach Anspruch 6, **dadurch gekennzeichnet, dass** der zumindest eine interne Sensor (48, 50) mit der ersten Kommunikationsschnittstelle (44) über ein außerhalb des Ventilgehäuses (14) verlaufendes Kabel (78) verbunden ist.

8. Heiz- oder Kühlanlagen-Mischereinrichtung nach einem der vorangehenden Ansprüche, **dadurch gekennzeichnet, dass** die erste (44) und die zweite (46) Kommunikationsschnittstelle als drahtlose Kommunikationsschnittstellen, insbesondere als Funkschnittstellen ausgebildet sind.

9. Heiz- oder Kühlanlagen-Mischereinrichtung nach einem der vorangehenden Ansprüche, **gekennzeichnet durch** zumindest ein Umwälzpumpenaggregat (2), welches vorzugsweise mit einem der Anschlüsse (A-B) des Ventilgehäuses (14) verbunden oder verbindbar ist.

10. Heiz- oder Kühlanlagen-Mischereinrichtung nach Anspruch 9, **dadurch gekennzeichnet, dass** die externe Steuereinrichtung (40) Teil des Umwälzpumpenaggregates (2) ist und vorzugsweise gleichzeitig der Steuerung des Umwälzpumpenaggregates (2) dient.

11. Heiz- oder Kühlanlagen-Mischereinrichtung nach einem der vorangehenden Ansprüche, **dadurch gekennzeichnet, dass** die externe Steuereinrichtung (40) zur Steuerung und/oder Regelung der Stellung des Ventilelementes (24) und/oder der Drehzahl des Umwälzpumpenaggregates (2) auf Grundlage zumindest eines Ausgangssignals des zumindest einen internen Sensors (48, 50) und/oder zumindest einen externen Sensors (52, 56) ausgebildet ist und an die interne Steuereinrichtung (38) einen Sollwert für die Stellung des Ventilelementes (14) ausgibt.

12. Heiz- oder Kühlanlagen-Mischereinrichtung nach einem der vorangehenden Ansprüche, **dadurch gekennzeichnet, dass** der zumindest eine interne Sensor (48, 50) eine Druckdifferenz zwischen einem der Anschlüsse (A, B) und einem Aufnahmeraum (22), in welchem das Ventilelement (14) angeordnet ist, oder zwischen zweien der Anschlüsse (A, B, A-B) erfasst.

13. Heiz- oder Kühlanlagen-Mischereinrichtung nach Anspruch 12, **dadurch gekennzeichnet, dass** die externe Steuereinrichtung (40) derart ausgestaltet ist, dass sie auf Grundlage zumindest einer von zumindest einem internen Sensor (48, 50) erfassten Druckdifferenz einen Durchfluss durch die Mischereinrichtung berechnet.

14. Heiz- oder Kühlanlagen-Mischereinrichtung nach einem der vorangehenden Ansprüche, **dadurch gekennzeichnet, dass** das Ventilgehäuse (14) eine nach außen geöffnete Sensoraufnahme (66, 68) aufweist, in welche der zumindest eine Sensor (48, 50) von außen entnehmbar eingesetzt ist.

15. Heiz- oder Kühlanlagen-Mischereinrichtung nach einem der vorangehenden Ansprüche, **dadurch gekennzeichnet, dass** zumindest ein Erfassungsabschnitt des zumindest einen internen Sensors (48, 50) in einem Sensorraum der Sensoraufnahme (66, 68) im Inneren des Ventilgehäuses (14) angeordnet ist, wobei der Sensorraum über zumindest einen Verbindungskanal (70, 72, 74, 76) mit zumindest einem der Strömungswege verbunden ist und der Sensorraum außerhalb der Strömungswege gelegen ist.

16. Heiz- oder Kühlanlagen-Mischereinrichtung nach Anspruch 15, **dadurch gekennzeichnet, dass** der Sensorraum mit einem ersten Verbindungskanal (70, 74) mit einem der Strömungswege stromaufwärts des Ventilelementes (24) und mit einem zweiten Verbindungskanal (72, 76) mit einem Aufnahmeraum (22), in welchem das Ventilelement (24) angeordnet ist, verbunden ist.

17. Heiz- oder Kühlanlagen-Mischereinrichtung nach einem der vorangehenden Ansprüche, **dadurch gekennzeichnet, dass** der erste (A-B), der zweite (A) und der dritte (B) Anschluss, ein Aufnahmeraum (22), in welchem das Ventilelement (24) angeordnet ist, sowie zumindest eine Sensoraufnahme (66, 68) für den zumindest einen internen Sensor (48, 50) in einem gemeinsamen einstückigen Abschnitt des Ventilgehäuses (14) angeordnet sind.

18. Heiz- oder Kühlanlagen-Mischereinrichtung nach einem der vorangehenden Ansprüche, **dadurch gekennzeichnet, dass** die Strömungsrichtung durch die Strömungswege entweder von dem zweiten Anschluss (A) und dem dritten Anschluss (B) zu dem ersten Anschluss (A-B) oder umgekehrt von dem ersten Anschluss (A-B) zu dem zweiten Anschluss (A) und dem dritten Anschluss (B) verläuft.

## Claims

1. A heating facility or cooling facility mixing device with a valve housing (14) which comprises a first (A-B), a second (A) and a third connection (B), as well defines a first flow path from the first connection (A-B) to the second connection (A), and a second flow path from the first connection (A-B) to the third connection (B), wherein a movable valve element (24) is arranged in the inside of the valve housing (14) in the two flow paths, said valve element being designed and arranged in a manner such that the ratio of the cross sections of the two flow paths to one another can be varied by way of displacing the valve element (24),
wherein
a drive (36) for moving the valve element (24) is arranged on the valve housing (14),
wherein at least one internal sensor (48, 50) is arranged in or on the valve housing,
**characterised in that**
the drive (36) comprises an internal control device (38) for the movement control of the drive (36),
the internal control device (38) comprises a first communication interface (44) for communication with an external control device (40) which comprises a corresponding second communication interface (46), and
the at least one internal sensor (48, 50) which is arranged in or on the valve housing (14) is connected to the first communication interface (44) for transmitting a sensor signal to the external control device (40).

2. A heating facility or cooling facility mixing device according to claim 1, **characterised in that** the internal control device (38) is designed to adjust and preferably closed-loop control a position of the valve element (24) which is specified by the external control device (40), via the drive (36).

3. A heating facility or cooling facility mixing device according to claim 1 or 2, **characterised in that** the at least one sensor (48, 50) is arranged in the valve housing (14) on or in one of the flow paths, in order to detect at least one state variable of the medium which is located in the flow path.

4. A heating facility or cooling facility mixing device according to one of the preceding claims, **characterised by** at least one external sensor (52, 56) which is arranged outside the valve housing (14) and which is connected to the external control device (40), preferably in a manner separate from at least the first communication interface (44).

5. A heating facility or cooling facility mixing device according to one of the preceding claims, **characterised in that** the at least one internal sensor (48, 50) and/or the at least one external sensor is a pressure sensor, a temperature sensor and/or a flow sensor.

6. A heating facility or cooling facility mixing device according to one of the preceding claims, **characterised in that** the drive (36) is arranged in a motor housing (16) which is connected to the valve housing (14) or is formed as one piece with the valve housing (14), wherein preferably the internal control device (38) is arranged in the motor housing (16) or an electronics housing which is connected to the motor housing (16).

7. A heating facility or cooling facility mixing device according to claim 6, **characterised in that** the at least one internal sensor (48, 50) is connected to the first communication interface (44) via a cable (78) which runs outside the valve housing (14).

8. A heating facility or cooling facility mixing device according to one of the preceding claims, **characterised in that** the first (44) and the second (46) communication interface are designed as wireless communication interfaces, in particular as radio interfaces.

9. A heating facility or cooling facility mixing device according to one of the preceding claims, **characterised by** at least one circulation pump assembly (2) which is preferably connected or connectable to one of the connections (A-B) of the valve housing (14).

10. A heating facility or cooling facility mixing device according to claim 9, **characterised in that** the external control device (40) is part of the circulation pump assembly (2) and preferably simultaneously serves for the control of the circulation pump assembly (2).

11. A heating facility or cooling facility mixing device according to one of the preceding claims, **characterised in that** the external control device (40) is designed for the control and/or regulation of the position of the valve element (24) and/or of the speed of the circulation pump assembly (2), on the basis of at least one output signal of the at least one internal sensor (48, 50) and/or at least one external sensor (52, 56) and outputs a setpoint for the position of the valve element (14) to the internal control device (38).

12. A heating facility or cooling facility mixing device according to one of the preceding claims, **characterised in that** the at least one internal sensor (48, 50) detects a pressure difference between one of the connections (A, B) and a receiving space (22), in which the valve element (14) is arranged, or between two of the connections (A, B, A-B).

13. A heating facility or cooling facility mixing device according to claim 12, **characterised in that** the external control device (40) is designed in a manner such that it computes a flow through the mixing device on the basis of at least one pressure difference which is detected by at least one internal sensor (48, 50).

14. A heating facility or cooling facility mixing device according to one of the preceding claims, **characterised in that** the valve housing (14) comprises an outwardly open sensor receiver (66, 68), into which the at least one sensor (48, 50) can be removably inserted from the outside.

15. A heating facility or cooling facility mixing device according to one of the preceding claims, **characterised in that** at least a detection section of the at least one internal sensor (48, 50) is arranged in a sensor space of the sensor receiver (66, 68) in the inside of the valve housing (14), wherein the sensor space is connected via at least one connection channel (70, 72, 74, 76) to at least one of the flow paths, and the sensor space is situated outside the flow paths.

16. A heating facility or cooling facility mixing device according to claim 15, **characterised in that** the sensor space is connected with a first connection channel (70, 74) to one of the flow paths upstream of the valve element (24) and with a second connection channel (72, 76) is connected to a receiving space (22), in which the valve element (24) is arranged.

17. A heating facility or cooling facility mixing device according to one of the preceding claims, **characterised in that** the first (A-B), the second (A) and the third connection (B), a receiving space (22), in which the valve element (24) is arranged, as well as at least one sensor receiver (66, 68) for the at least one internal sensor (48, 50) are arranged in a common, single-piece section of the valve housing (14).

18. A heating facility or cooling facility mixing device according to one of the preceding claims, **characterised in that** the flow direction through the flow paths either runs from the second connection (A) and the third connection (B) to the first connection (A-B) or vice versa from the first connection (A-B) to the second connection (A) and to the third connection (B).

## Revendications

1. Dispositif mélangeur d'une installation de chauffage ou de refroidissement, comprenant un corps de vanne (14) qui présente un premier (A-B), un deuxième (A) et un troisième raccord (B) de même qu'il définit un premier trajet d'écoulement du premier raccord (A-B) au deuxième raccord (A) et un second trajet d'écoulement du premier raccord (A-B) au troisième raccord (B), un élément de vanne mobile (24) étant disposé à l'intérieur du corps de vanne (14) dans les deux trajets d'écoulement, lequel est conçu et disposé de façon à pouvoir faire varier le rapport des sections transversales, l'une par rapport à l'autre, des deux trajets d'écoulement par déplacement de l'élément de vanne (24), un entraînement (36) étant disposé sur le corps de vanne (14) pour déplacer l'élément de vanne (24), au moins un capteur interne (48, 50) étant disposé dans ou sur le corps de vanne,
**caractérisé en ce que**
l'entraînement (36) comporte un dispositif de commande interne (38) pour la commande du mouvement de l'entraînement (36),
le dispositif de commande interne (38) comporte une première interface de communication (44) pour communication avec un dispositif de commande externe (40) qui présente une seconde interface de communication (46) correspondante, et
ledit au moins un capteur interne (48, 50) disposé dans ou sur le corps de vanne (14) est relié à la première interface de communication (44) pour le transfert d'un signal de capteur au dispositif de commande externe (40).

2. Dispositif mélangeur d'une installation de chauffage ou de refroidissement selon la revendication 1, **caractérisé en ce que** le dispositif de commande interne (38) est conçu pour régler, et de préférence réguler, par l'intermédiaire de l'entraînement (36), une position de l'élément de vanne (24) prédéterminée par le dispositif de commande externe (40).

3. Dispositif mélangeur d'une installation de chauffage ou de refroidissement selon la revendication 1 ou 2, **caractérisé en ce que** ledit au moins un capteur (48, 50) est disposé dans le corps de vanne (14) sur ou dans l'un des trajets d'écoulement afin de détecter au moins une grandeur d'état du milieu présent dans le trajet d'écoulement.

4. Dispositif mélangeur d'une installation de chauffage ou de refroidissement selon l'une des revendications précédentes, **caractérisé par** au moins un capteur externe (52, 56) disposé à l'extérieur du corps de vanne (14), qui est relié au dispositif de commande externe (40), de préférence séparément d'au moins la première interface de communication (44).

5. Dispositif mélangeur d'une installation de chauffage ou de refroidissement selon l'une des revendications précédentes, **caractérisé en ce que** ledit au moins un capteur interne (48, 50) et/ou ledit au moins un capteur externe est un capteur de pression, de température et/ou de débit.

6. Dispositif mélangeur d'une installation de chauffage ou de refroidissement selon l'une des revendications précédentes, **caractérisé en ce que** l'entraînement (36) est disposé dans un carter moteur (16) raccordé au corps de vanne (14) ou réalisé d'un seul tenant avec le corps de vanne (14), de préférence le dispositif de commande interne (38) étant disposé dans le carter moteur (16) ou dans un boîtier électronique raccordé au carter moteur (16).

7. Dispositif mélangeur d'une installation de chauffage ou de refroidissement selon la revendication 6, **caractérisé en ce que** ledit au moins un capteur interne (48, 50) est relié à la première interface de communication (44) par l'intermédiaire d'un câble (78) s'étendant à l'extérieur du corps de vanne (14).

8. Dispositif mélangeur d'une installation de chauffage ou de refroidissement selon l'une des revendications précédentes, **caractérisé en ce que** la première (44) et la seconde (46) interface de communication sont réalisées sous forme d'interfaces de communication sans fil, en particulier d'interfaces radio.

9. Dispositif mélangeur d'une installation de chauffage ou de refroidissement selon l'une des revendications précédentes, **caractérisé par** au moins un groupe moto-pompe de recirculation (2) qui est relié ou peut être relié de préférence à l'un des raccords (A-B) du corps de vanne (14).

10. Dispositif mélangeur d'une installation de chauffage ou de refroidissement selon la revendication 9, **caractérisé en ce que** le dispositif de commande externe (40) fait partie du groupe moto-pompe de recirculation (2) et sert, de préférence, en même temps à la commande du groupe moto-pompe de recirculation (2).

11. Dispositif mélangeur d'une installation de chauffage ou de refroidissement selon l'une des revendications précédentes, **caractérisé en ce que** le dispositif de commande externe (40) est conçu pour la commande et/ou la régulation de la position de l'élément de vanne (24) et/ou de la vitesse du groupe moto-pompe de recirculation (2) sur la base d'au moins un signal de sortie dudit au moins un capteur interne (48, 50) et/ou dudit au moins un capteur externe (52, 56) et émet au dispositif de commande interne (38) une valeur de consigne pour la position de l'élément de vanne (14).

12. Dispositif mélangeur d'une installation de chauffage ou de refroidissement selon l'une des revendications précédentes, **caractérisé en ce que** ledit au moins un capteur interne (48, 50) détecte une différence de pression entre l'un des raccords (A, B) et un espace de réception (22) dans lequel est disposé l'élément de vanne (14), ou entre deux des raccords (A, B, A-B).

13. Dispositif mélangeur d'une installation de chauffage ou de refroidissement selon la revendication 12, **caractérisé en ce que** le dispositif de commande externe (40) est configuré de manière à calculer, sur la base d'au moins une différence de pression détectée par au moins un capteur interne (48, 50), un débit à travers le dispositif mélangeur.

14. Dispositif mélangeur d'une installation de chauffage ou de refroidissement selon l'une des revendications précédentes, **caractérisé en ce que** le corps de vanne (14) présente un logement de capteur (66, 68) ouvert vers l'extérieur, dans lequel est inséré, de manière à pouvoir être retiré de l'extérieur, ledit au moins un capteur (48, 50).

15. Dispositif mélangeur d'une installation de chauffage ou de refroidissement selon l'une des revendications précédentes, **caractérisé en ce qu'**au moins une section de détection dudit au moins un capteur interne (48, 50) est disposée dans un espace de capteur du logement de capteur (66, 68) à l'intérieur du corps de vanne (14), l'espace de capteur étant relié à au moins l'un des trajets d'écoulement via au moins un canal de liaison (70, 72, 74, 76), et l'espace de capteur étant situé à l'extérieur des trajets d'écoulement.

16. Dispositif mélangeur d'une installation de chauffage ou de refroidissement selon la revendication 15, **caractérisé en ce que** l'espace de capteur est relié par un premier canal de liaison (70, 74) à l'un des trajets d'écoulement en amont de l'élément de vanne (24) et par un second canal de liaison (72, 76) à un espace de réception (22) dans lequel est disposé l'élément de vanne (24).

17. Dispositif mélangeur d'une installation de chauffage ou de refroidissement selon l'une des revendications précédentes, **caractérisé en ce que** le premier (A-B), le deuxième (A) et le troisième (B) raccord, un espace de réception (22) dans lequel est disposé l'élément de vanne (24), ainsi qu'au moins un logement de capteur (66, 68) pour ledit au moins un capteur interne (48, 50) sont disposés dans une partie commune solidaire du corps de vanne (14).

18. Dispositif mélangeur d'une installation de chauffage ou de refroidissement selon l'une des revendications précédentes, **caractérisé en ce que** la direction d'écoulement à travers les trajets d'écoulement s'étend soit du deuxième raccord (A) et du troisième raccord (B) au premier raccord (A-B) ou inversement du premier raccord (A-B) au deuxième raccord (A) et au troisième raccord (B).
